# EUROPÄISCHE PATENTSCHRIFT

(11) **EP 2 205 435 B1**
(45) Veröffentlichungstag und Bekanntmachung des Hinweises auf die Patenterteilung: **20.06.2012**
(21) Anmeldenummer: 08842884.2
(22) Anmeldetag: 27.09.2008
(51) Int. Cl.: B32B 27/32, B32B 27/08, B32B 27/20, B32B 5/18, G09F 3/10

(54) **ETIKETTENFOLIE FÜR RUNDUMETIKETTEN**
LABEL FILM FOR ALL-ROUND LABELS
FEUILLE POUR ÉTIQUETTES ENVELOPPANTES

(30) Priorität: 24.10.2007 DE 102007050851
(43) Veröffentlichungstag der Anmeldung: 14.07.2010
(73) Patentinhaber: Treofan Germany GmbH & Co.KG, 66539 Neunkirchen (DE)
(72) Erfinder: KOCHEM, Karl-Heinz, 66539 Neunkirchen (DE); LOZANO, Roberto, Michoacán 58600 (MX); HENSHALL, Duncan, Greensboro, NC 27410 (US)
(74) Vertreter: Mai, Dörr, Besier
(86) Internationale Anmeldenummer: PCT/EP2008/008242
(87) Internationale Veröffentlichungsnummer: WO 2009/052921

(56) Entgegenhaltungen:
- DE-A1- 19 522 568
- US-A- 4 472 227

## Beschreibung

Die vorliegende Erfindung betrifft die Verwendung einer mehrschichtigen, Opaken, biaxial orientierter Polyolefinfolie als Rundumetikett.

Etikettenfolien umfassen ein umfangreiches und technisch komplexes Gebiet. Man unterscheidet verschiedene Etikettiertechniken, welche hinsichtlich der Prozeßbedingungen grundverschieden sind und zwangsläufig an die Etikettenmaterialien unterschiedliche technische Anforderungen stellen. Allen Etikettierprozeßen ist gemeinsam, daß als Endergebnis optisch ansprechend etikettierte Behältnisse resultieren müssen.

Bei den Etikettierverfahren werden sehr verschiedene Techniken zum Applizieren des Etiketts angewendet. Man unterscheidet zwischen Selbstklebeetiketten, Rundumetiketten, Schrumpfetiketten, In-Mould Etiketten, Patch Labelling etc. Die Verwendung einer Folie aus thermoplastischem Kunststoff als Etikett ist in allen diesen verschiedenen Etikettierverfahren möglich.

Allen In-Mould Etikettierverfahren ist gemeinsam, daß das Etikett am eigentlichen Formgebungsverfahren des Behälters teilnimmt und währenddessen appliziert wird. Hierbei kommen verschiedene Formgebungsverfahren zum Einsatz, wie beispielsweise Spritzgußverfahren, Blasformverfahren, Tiefziehverfahren.

Beim Spritzgußverfahren werden einzelne Etiketten einem Stapel entnommen oder von einer Rolle zugeschnitten und in die Spritzgußform eingelegt. Die Form ist dabei so gestaltet, daß der Schmelzestrom hinter das Etikett gespritzt wird und die Vorderseite der Folie an der Wandung der Spritzgußform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab. Im Ergebnis muß das Etikett faltenfrei und optisch einwandfrei auf dem Behälter haften.

Auch beim Blasformen ist eine direkte In-Mould Etikettierung möglich. Bei diesem Verfahren wird ein Schmelzeschlauch durch eine Ringdüse vertikal nach unten extrudiert. Ein vertikal geteiltes Formwerkzeug fährt zusammen und umschließt den Schlauch, der dabei am unteren Ende zugequetscht wird. Am oberen Ende wird ein Blasdorn eingeführt durch den die Öffnung des Formlings ausgebildet wird. Ober den Blasdom wird dem warmen Schmelzeschlauch Luft zugeführt, so daß er sich ausdehnt und sich an die Innenwände des Formwerkzeugs anlegt. Hierbei muß sich das Etikett mit dem zähflüssigen Kunststoff des Schmelzeschlauchs verbinden. Anschließend wird die Form geöffnet und der Überstand an der geformten Öffnung abgeschnitten. Der geformte und etikettierte Behälter wird ausgestoßen und kühlt ab.

Beim Tiefziehen werden unorientierte dicke Kunststoffplatten, meist gegossenes PP oder PS (Polystyrol), in einer Dicke von ca. 200 - 750 µm erwärmt und mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen erheblich niedrigere Temperaturen zur Anwendung, so daß die Haftung des Etiketts an dem Behälter ein kritischer Faktor sein kann.

Grundsätzlich können bei allen diesen In-mold Verfahren Folien aus thermoplastischen Kunststoffen zur Etikettierung der Behältnisse beim Formen eingesetzt werden. Die Folien müssen hierzu ein ausgewähltes Eigenschaftsprofil aufweisen, um zu gewährleisten, daß sich die Etikettenfolie und der geformte Formkörper glatt und blasenfrei aneinander schmiegen und sich miteinander verbinden. Häufig ist die Haftung des Etiketts auf dem Behälter mangelhaft. Des weiteren treten Lufteinschlüsse zwischen Etikett und Behälter auf, welche die Optik des etikettierten Behälters als auch die Haftung beeinträchtigen. Bei der In-Mold Etikettierung wird die Geschwindigkeit des Prozesses im wesentlichen von der Zeit bestimmt, die zur Formung des Behälters benötigt wird. Die entsprechenden Taktzeiten mit denen die Etiketten in diesen Verfahren gegebenenfalls entstapelt und gehandhabt werden sind vergleichsweise moderat.

Im Stand der Technik sind verschiedenste Folien beschrieben, welche im Hinblick auf ihre Verwendung als In-Mold Etikett optimiert sind. Häufig weisen diese Folien eine rauhe innere, d.h. dem Behälter zugewandte Oberfläche auf, um die Lufteinschlüsse zwischen dem Behälter und dem Etikett zu vermeiden. Die äußere Oberfläche ist hingegen so optimiert, daß keine Grenze zwischen dem applizierten Etikett und dem Behälter zu erkennen ist, weshalb die In-Mold Etiketten glänzende äußere Oberflächen aufweisen. Die Entstapelung solcher Folien beim In-Mold Etikettieren ist unproblematisch.

Neben der In-Mold Etikettierung ist aus Kostengründen auch die Rundumetikettierung bei der Etikettierung von nicht konischen Behältern und Flaschen sehr verbreitet. Auch hier wird zunehmend Papier durch thermoplastische Folien substituiert.

Bei der Rundumetikettierung wird ein dem Druckrapport entsprechender Etikettenabschnitt abgelängt, dieser Etikettenabschnitt wird um den Behälter herumgeschlagen, so daß die einander gegenüberliegenden Randbereiche überlappen. An der Überlappung werden die Ränder z.B. mit einem Hot-Melt Kleber verklebt, wobei die Außenseite gegen die Innenseite des Etikettes verklebt wird. Alternativ werden zugeschnittene Etiketten gestapelt, in Magazinen bereit gestellt und beim Etikettiervorgang dem Magazin einzeln entnommen. Rundumetiketten eignen sich vorwiegend für nicht-konische Behältnisse, bzw. für die zylindrischen Bereiche eines Behälters, aber vorteilhafterweise kann jedes Behältermaterial so etikettiert werden, beispielsweise Behälter aus Kunststoff, wie PET Flaschen, Glas, Metall oder Pappe.

Das Entstapeln der geschnittenen Etiketten ist bei Rundumetiketten aus thermoplastischer Folie problematisch. Bei der Rundumetikettierung wird der bereits geformte Behälter etikettiert. Die Verarbeitungsgeschwindigkeiten sind daher wesentlich höher als bei In-mold Verfahren, auf modernen Anlagen beispielsweise mindestens 10.000 Behälter pro Stunde. Auch bei solchen hohen Taktzeiten muß sichergestellt sein, daß sich das zugeschnittene und gestapelte Etikett bei diesen hohen Geschwindigkeiten gut und zuverlässig vereinzeln läßt. Haftung und Blasenfreiheit sind hingegen beim Rundumetikett kein Problem.

Ein weiterer Unterschied zwischen den Rundumetiketten und den In-Mold Etiketten sind die üblichen Druckverfahren. Aus Kostengründen werden beim Bedrucken von Rundumetiketten die Folien zunächst zu großformatigen Bögen geschnitten, auf die mehrere Vorlagen nebeneinander gedruckt werden. In diesem Druckprozeß werden auch die gestapelten Bögen mit sehr hohen Taktzahlen von mindestens 1000 Bögen pro Stunde vereinzelt. Aus den bedruckten Bögen werden anschließend die einzelnen Rundumetiketten ausgestanzt und ihrerseits ebenfalls gestapelt. Aus wirtschaftlichen Gründen ist es wünschenswert so viele Druckbilder wie möglich auf einem Bogen unterzubringen, d.h je größer der Bogen desto geringer die Druckkosten. Dieser Optimierung sind jedoch Grenzen gesetzt. Je größer die Bögen, desto schwieriger ist die Handhabung der Folienbögen bei hohen Taktzahlen, insbesondere lassen sich die Bögen beim Einführen in die Druckmaschine nicht mehr zuverlässig mit diesen Entstapelungsgeschwindigkeiten vereinzeln.

EP 0798217 beschreibt ein Verfahren zum Wrap Around Etikettieren von Behältern. Nach dieser Lehre werden die Etiketten unmittelbar vor dem Aufbringen onduliert, um die Spannungen auf die Klebenaht zu reduzieren. Die Schrift erwähnt Rundumetiketten aus thermoplastischer Folie.

DE 3515324 beschreibt Etikettiermachinen zum Aufbringen von Rundumetiketten. Diese Schrift beschreibt die Etikettenmaterialien nicht im Einzelnen.

EP 0611102 beschreibt Folien aus thermoplastischen Polymeren, die als In-Mold Etiketten eingesetzt werden. Die Folien sind aus einer vakuolenhaltigen Basisschicht und einer Zwischenschicht aus Propylenhomopolymer und beidseitigen Deckschichten aufgebaut. Die äußere Deckschicht ist bedruckbar und glänzend und aus Propylenmischpolymerisaten aufgebaut. Die gegenüberliegende Deckschicht ist auf der Basisschicht aufgebracht und enthält zwei miteinander unverträgliche Polymere und ist matt. Es ist beschrieben, daß die matte Innenseite das Verblocken gegen die bedruckbare Seite verringert, wodurch einzelne Etiketten dem Stapel besser entnommen werden können. Diese Folie ist jedoch hinsichtlich ihrer Verarbeitbarkeit als Rundumetikett noch verbesserungsbedürftig. Insbesondere lassen sich die großformatigen Bogen-Zuschnitte aus dieser Folie nicht zuverlässig entstapeln.

Im Stand der Technik sind viele Folien mit matter oder rauher Oberfläche bekannt. Wie vorstehend erwähnt wird häufig der Einsatz von Polymermischungen aus inkompatiblen Polymeren in Deckschichten beschrieben. Diese Technik wird bei transparenten und opaken Verpackungsfolien sowie bei In-Mold Etiketten angewendet. Bei den Verpackungsfolien kommt es in erster Linie auf eine einwandfrei gleichmäßige matte Optik an, wohingegen bei In-Mold Etiketten die Mattschicht Lufteinschlüsse zwischen dem gespritzten Behälter und dem Etikett vermeiden soll. Neben der Mischung aus inkompatiblen Polymere sind weitere Techniken zur Erzeugung rauher Oberflächen bekannt.

Im Stand der Technik wird beispielsweise auch die Aufrauhung der Oberfläche durch mechanische Prägung beschrieben. Diese Strukturierung ist bei In-Mold Etiketten besonders vorteilhaft, um das Entweichen der zwischen Behälter und Etikett eingeschlossenen Luft zu ermöglichen.

Ähnliche Effekte bewirken ß-Nukleierungsmittel, die einer Propylenhomopolymer-Schicht zugesetzt werden, wodurch eine mikroporöse Schicht erzeugt wird. Diese mikroporöse Schicht ermöglicht gleichfalls eine gute Entlüftung zwischen Behälter und In-Mold Etikett.

Es wird beschrieben Folien mit einem gefüllten Coating zu beschichten, beispielsweise Kaolin, wodurch eine rauhe Oberfläche erzeugt wird. Alternativ können hohe Konzentrationen an Pigmenten in die coextrudierten Deckschichten eingearbeitet werden, um Oberflächen-Rauheit zu erzeugen.

Allen bekannten Etiketten-Folien haftet jedoch der Nachteil an, daß das Entstapeln der zugeschnittenen und gestapelten Etiketten verbesserungsbedürftig ist, insbesondere bei großen Zuschnitten und hohen Taktzahlen können die bekannten Folien nicht zuverlässig vereinzelt werden.

Es war daher Aufgabe der vorliegenden Erfindung eine Folie zur Verfügung zu stellen, welche hinsichtlich der Handhabung und Enstapelbarkeit verbessert ist. Die Folie muß sich sowohl in Form großer Zuschnitte beim Bedrucken gut vereinzeln als auch im Etikettierprozeß mit hohen Taktzahlen gut entstapeln lassen.

Diese Aufgabe wird für Rundunmetiketten gelöst durch die Verwendung einer Polyolefinfolie nach Anspruch 1. Die Unteransprüche geben bevorzugte Ausführungsformen der Erfindung an.

Im Rahmen der vorliegenden Erfindung wurde gefunden, daß die Folien nach Anspruch 1 überraschenderweise alle vorstehend genannten Anforderungen beim Einsatz als Rundumetikett-Etikett erfüllen, wenn beidseitig Zwischenschichten aus Propylenhomopolymer und beidseitig rauhe Deckschichten angebracht sind, wobei die Oberflächenrauheit der beiden Deckschichten durch die Mischung von zwei inkompatiblen Polymeren erzeugt wird und einen Mindestwert von 2,5µm (bei einem cut off von 0,25mm) aufweisen.

Die Abmischung der inkompatiblen Polymeren, wie beispielsweise Propylen-Co-und/oder Propylen-Terpolymeren mit einem unverträglichen Polyethylen, erzeugt in an sich bekannter Weise eine Oberflächerauheit. Es wurde überraschenderweise gefunden, daß eine zweite derartige rauhe Oberfläche die Entstapelbarkeit, insbesondere bei großen Bögen, wesentlich verbessert. Die bekannten In-mold Etiketten mit einer einseitig glänzenden und einer einseitig rauhen Oberfläche lassen sich nicht als große Bögen beim Bedrucken verarbeiten. Des weiteren war es sehr überraschend, daß die Homopolymer-Zwischenschichten zu einer verbesserten Entstapelbarkeit beitragen. Es wurde erwartet, daß derartige Propylenhomopolymer Zwischenschichten die Rauheit der Folie herabsetzen und damit das Entstapeln verschlechtern. Es ist im Stand der Technik bekannt, daß Homopolymer-Zwischenschichten zur Verbesserung des Oberflächenglanzes von opaken Folien eingesetzt werden. Es lag daher nicht nahe in eine beidseitig rauhe Folie beidseitig an sich glanzverbessernde Zwischenschichten einzubauen, da hierdurch eine Reduzierung der Rauheit und damit eine schlechtere Entstapelbarkeit zu erwarten war. Überraschenderweise wurde jedoch gefunden, daß sich die Entstapelbarkeit durch die Zwischenschichten verbessert und vergleichsweise weniger Störungen sowohl beim Bedrucken von großen Bögen als auch bei der Verarbeitung der Rundumetikett auftreten. Letztlich muß zusätzlich eine Mindestdicke der Folie von 40µm eingehalten werden. Mit dünnen Folien von <40µm Dicke treten trotz Zwischenschicht in Verbindung mit beidseitig rauhen Oberflächen häufiger Probleme auf.

Für die vorliegende Erfindung ist es somit wesentlich, daß mehrere strukturelle Merkmale erfüllt sein müssen, um die Folie sowohl in Form großer Bögen als auch beim Rundumetikettieren gut verarbeiten, insbesondere schnell und zuverlässig entstapeln, zu können.

Die Folie muß nicht unbedingt einen symmetrischen Aufbau haben. Wesentlich für die verbesserte Entstapelbarkeit und die bessere Verarbeitbarkeit sind beidseitig rauhe Oberflächenstrukturen, sowie beidseitige Zwischenschichten mit einer zu Mindestdicke von 3µm in Verbindung mit einer Gesamtdicke der Folie von mindestens 40µm.

Die Folie umfaßt somit mindestens fünf Schichten, wobei die Basisschicht die zentrale innere Schicht ist, die die größte Dicke aller Schichten aufweist. Die Zwischenschichten sind zwischen der Basisschicht und den Deckschichten angebracht, im allgemeinen direkt auf den jeweiligen Oberflächen der Basisschicht. Deckschichten sind naturgemäß die äußeren Schichten der Folie, die sich bei fünfschichtigen Ausführungsformen direkt auf den Zwischenschichten befinden. Soweit es die gewünschten Eigenschaften der Folie nicht beeinträchtigt kann die Folie zusätzlich weitere Schichten aufweisen.

Die Deckschichten enthalten vorzugweise ein Propylenhomopolymer, Co- und/oder Terpolymer aus Propylen, Ethylen und/oder Butylen-Einheiten und ein Polyethylen. Im allgemeinen enthalten die Deckschichten mindestens 30 bis 95 Gew.-%, vorzugsweise 45 bis 80 Gew.-%, insbesondere 50 bis 80 Gew.-% des Homo-, Co- und/oder Terpolymeren und 5 bis 70 Gew.-%, vorzugsweise 20 bis 55 Gew.-%, insbesondere 20 bis 55 Gew.-% des Polyethylens, bezogen auf das Gewicht der jeweiligen Deckschicht, sowie gegebenenfalls zusätzlich übliche Additive in jeweils wirksamen Mengen. Der Anteil an Polymeren reduziert sich entsprechend geringfügig bei Zumischung derartiger Additive.

Geeignete Co- oder Terpolymere sind aus Ethylen, Propylen oder Butylen-Einheiten aufgebaut, wobei Terpolymere drei verschiedene Monomere enthalten. Die Zusammensetzung der Co- oder Terpolymeren aus den jeweiligen Monomeren kann innerhalb der nachstehend beschriebenen Grenzen variieren. Im allgemeinen enthalten die Co- und/oder Terpolymeren über 50 Gew.-% Propylen-Einheiten, d.h es sind Propylenco- und/oder Propylenterpolymere mit Ethylen- und/oder Butylen-Einheiten als Comonomere. Copolymere enthalten im allgemeinen mindestens 60 - 99 Gew.-%, vorzugsweise 65 bis 97 Gew.-% Propylen und höchstens 1 - 40 Gew.-%, vorzugsweise 3 bis 35 Gew.-% Ethylen oder Butylen als Comonomer. Terpolymere enthalten im allgemeinen 65 bis 96 Gew.-%, vorzugsweise 72 bis 93 Gew.-% Propylen, und 3 bis 34 Gew.-%, vorzugsweise 5 bis 26 Gew.-% Ethylen und 1 bis 10 Gew.-%, vorzugsweise 2 bis 8 Gew.-% Butylen. Der Schmelzindex der Co-und/oder Terpolymeren beträgt im allgemeinen 0,1 bis 20 g/10min (190°C, 21,6N), vorzugsweise 0,1 bis 15 g/10min. Der Schmelzpunkt kann in einem Bereich von 70 bis 150°C liegen, vorzugsweise 100 bis 140°C.

Gegebenenfalls können die vorstehend genannten Co- und Terpolymeren untereinander gemischt werden. Hierbei können die Anteile von Co- zu Terpolymer in beliebigen Grenzen variieren. Diese Mischung wird dann in den vorstehend, für die jeweiligen Co- und Terpolymeren beschriebenen Mengen, in jeder Deckschicht eingesetzt.

In einer weiteren Ausführungsform kann statt oder zusätzlich zu den genannten Co-und/oder Terpolymeren auch Propylenhomopolymer verwendet werden. Diese Modifikation kann eine verkürzte Haltbarkeit der Vorbehandlung aufweisen, so daß diese Ausführungsform nicht bevorzugt aber möglich ist, insbesondere kann die innere Oberfläche des Rundumetiketts, wenn diese nicht für eine Bedruckung vorgesehen ist eine derartige rauhe Deckschicht aus Propylenhomopolymer und Polyethylen aufweisen. Die Homopolymeren werden in den für die Co- und Terpolymeren beschriebenen Mengen eingesetzt. Geeignete Propylenhomopolymere sind solche, die nachstehend im Einzelnen als Propylenhomopolymer der Basisschicht beschrieben werden. Gegebenenfalls können die Homopolymeren auch mit den Co- und/oder Terpolymer gemischt werden. Der Anteil an Co- und/oder Terpolymer wird dann entsprechend um den Anteil an Homopolymer reduziert.

Es ist erfindungswesentlich, daß die Anteile an Co- und/oder Terpolymer, gegebenenfalls Homopolymer, und Polyethylen für die Deckschichten aus den genannten Mengen-Bereichen so gewählt werden, daß die Oberflächenrauheit Rz jeder Deckschicht mindestens 2,5µm beträgt, vorzugsweise 3 bis 8µm. Gegebenenfalls sind weitere Maßnahmen wie Oberflächenbehandlung und Schichtdicken und Zusatz von Antiblockmittel so zu wählen, daß dieser Rz-Wert erfüllt wird. Im allgemeinen sind beide Deckschichten jedoch im wesentlichen frei von partikelförmigen Füllstoffen, d.h. im allgemeinen liegt deren Menge unter 5 Gew.-%, vorzugsweise unter 2 Gew.-%, um die Nachteile wie Auskreiden zu vermeiden, zusätzlich verschlechtert sich durch Füllstoffe das Druckbild. Diese Empfehlung steht der zusätzlichen Einarbeitung von Antiblockmitteln, die im allgemeinen in einer Menge von unter 2 Gew.-% eingesetzt werden, nicht entgegen.

Vorzugweise weiser beide Deckschichten ein Polyethylen, welches mit den vorstehend beschriebenen Co- und/oder Terpolymeren, gegebenenfalls Propylenhomopolymeren, unverträglich ist, auf. Unverträglich bedeutet in diesem Zusammenhang, daß durch die Mischung der Propylenhomopolymeren, Co- und/oder Terpolymeren mit dem Polyethylen eine Oberflächenrauheit gebildet wird. Es wird angenommen, daß diese Rauheit durch die zwei separaten Phasen entsteht, die die nicht mischbaren Polymeren bilden. Geeignete Polyethylene sind beispielsweise HDPE oder MDPE. Das HDPE weißt im allgemeinen die nachstehend beschriebenen Eigenschaften auf, beispielsweise einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt im allgemeinen 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140°C. Geeignetes MDPE hat im allgemeinen einen MFI (50 N/190 °C) von größer 0,1 bis 50g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20°C/min), liegt zwischen 115 und 135°C.

Gegebenenfalls kann die innere Deckschicht weitere olefinische Polymere in geringen Mengen enthalten, soweit dadurch nicht die Funktionalität, insbesondere die erfindungswesentliche Oberflächenrauheit gestört wird. Hier kommen beispielsweise Polyolefine in Frage, die über Additiv-Batche in die jeweilige Deckschicht eingearbeitet werden.

Für die Deckschichten werden bevorzugt Propylen-Ethylen-Copolymere in Abmischung mit MDPE oder HDPE eingesetzt. Vorzugsweise beträgt der Ethylengehalt der Copolymeren 2 bis 10 Gew.-% und der Schmelzpunkt liegt in einem Bereich von 120 - 135°C. Besonders vorteilhaft wird die Oberfläche der äußeren Deckschicht einer Corona-Behandlung unterworfen.

Die Schichtdicke jeder Deckschicht beträgt im allgemeinen jeweils 2 bis 10µm, vorzugsweise 2,5 bis 8 µm, insbesondere 3 bis 6 µm. Eine erhöhte Deckschichtdicke von mindestens 2,5µm trägt vorteilhaft zur Erhöhung der Rauheit und damit zu einer verbesserten Entstapelung bei. Die Dicke der beiden Deckschichten kann, aber muß nicht identisch sein. Je dicker die Deckschichten, desto dicker kann auch die Dicke der Zwischenschicht gewählt werden, so daß beispielsweise Ausführungsformen mit Zwischenschichten von 5 - 10µm und Deckschichten von 3 - 5µm bevorzugt sind.

Die Oberflächenrauheit Rz der jeweiligen Deckschicht liegt im allgemeinen in einem Bereich von 2,5 - 6µm, vorzugsweise 3 - 5µm bei einem Cut-off von 0,25mm. Hier gilt in gleicher Weise wie für die Dicke der Folie, daß die Oberflächenrauheit auf beiden Seiten gleich sein kann, aber nicht gleich sein muß.

In einer besonders bevorzugten Ausführungsform wird eine oder werden beide Oberflächen Corona-, Plasma- oder Flamm-behandelt Diese Behandlung verbessert die Hafteigenschaften der Folienoberfläche für eine anschließende Dekoration und Bedruckung, d.h. die Benetzbarkeit mit und Haftung von Druckfarben und sonstigen Dekorationsmitteln zu gewährleisten. Gegebenenfalls kann einseitig metailisiert werden.

Jede der beiden Deckschichten kann zusätzlich übliche Additive wie Neutralisationsmittel, Stabilisatoren, Antistatika, Antiblockmittel und/oder Gleitmittel in jeweils wirksamen Mengen enthalten. Die nachstehenden Angaben in Gew.-% beziehen sich auf das Gewicht der jeweiligen Deckschicht.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen oder vernetzte Polymere wie vernetztes Polymethylmethacrylat oder vernetzte Siliconöle. Die mittlere Teilchengröße liegt zwischen 1 und 6µm, insbesondere 2 und 5 µm. Die wirksame Menge an Antiblockmittel liegt im Bereich von 0,1 bis 2 Gew.-%, vorzugsweise 0,5 bis 1,5 Gew.-%.

Gleitmittel sind höhere aliphatische Säureamide, höhere aliphatische Säureester und Metallseifen sowie Polydimethylsiloxane. Die wirksame Menge an Gleitmittel liegt im Bereich von 0,01 bis 3 Gew.-%, vorzugsweise 0,02 bis 1 Gew.-% bezogen auf die innere Deckschicht. Besonders geeignet ist der Zusatz von 0,02 bis 0,5 Gew.-% Polydimethylsiloxanen, insbesondere Polydimethylsiloxane mit einer Viskosität von 5 000 bis 1 000 000 mm2/s.

Die Folie weist erfindungsgemäß zwischen der opaken Basisschicht und den beiden rauhen Deckschichten beidseitig zusätzliche Zwischenschichten auf. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die opake Basisschicht der Folie enthält mindestens 70 Gew.-%, vorzugsweise 75 insbesondere 80 bis 98 Gew.-%, jeweils bezogen auf das Gewicht der Basisschicht, Polyolefine bzw. Propylenpolymeren, vorzugsweise Propylen homopolymere und vakuoleninitierende Füllstoffe.

Im allgemeinen enthält das Propylenpolymer mindestens 90 Gew.-%, vorzugsweise 94 bis 100 Gew.-%, insbesondere 98 bis <100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere.

Bevorzugt sind isotaktische Propylenhomopolymere mit einem Schmelzpunkt von 140 bis 170 °C, vorzugsweise von 150 bis 165 °C, und einen Schmetzflußindex (Messung DIN 53 735 bei 21,6 N Belastung und 230 °C) von 1,0 bis 10g/10min, vorzugsweise von 1,5 bis 6,5 g/10 min. Der n-heptanlösliche Anteil beträgt im allgemeinen 0,5 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels Mw zum Zahlenmittel Mn liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren der Basisschicht erreicht man beispielsweise durch dessen peroxidischen Abbau oder durch Herstellung des Polypropylens mittels geeigneter Metallocenkatalysatoren. Für die Zwecke der vorliegenden Erfindung sind auch hochisotaktische bzw. hockkristalline Polypropylene geeignet, deren Isotaktizität nach ¹³C-NMR mindestens 95%, vorzugsweise 96 - 99% beträgt. Derartige hochisotaktischen Polypropylene sind an sich im Stand der Technik bekannt und werden sowohl als HIPP als auch als HCPP bezeichnet.

Die opake Basisschicht enthält vakuoleninitierende Füllstoffe in einer Menge von maximal 30 Gew.-%, vorzugsweise 1 bis 15 Gew.-%, insbesondere 2 bis 10 Gew.-%, bezogen auf das Gewicht der Basisschicht. Zusätzlich zu den vakuoleninitierenden Füllstoffen kann die Basisschicht Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Basisschicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. "Pigmente" haben im allgemeinen einen mittleren Teilchendurchmesser von 0,01 bis maximal 1 µm, vorzugsweise 0,01 bis 0,7 µm, insbesondere 0,01 bis 0,4 µm. Pigmente umfassen sowohl sogenannte "weißpigmente", welche die Folien weiß einfärben, als auch "Buntpigmente", welche der Folie eine bunte oder schwarze Farbe verleihen. Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organische Verbindungen mit polaren und unpolaren Gruppen eingesetzt. Derartige Beschichtungen des TiO2 sind im Stand der Technik bekannt.

Im Sinne der vorliegenden Erfindung sind "vakuoleniniziierende Füllstoffe" feste Teilchen die mit der Polymermatrix unverträglich sind und beim Verstrecken der Folien zur Bildung von vakuolenartigen Hohlräumen führen, wobei Größe, Art und Anzahl der Vakuolen von der Größe und der Menge der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle, sofern Unverträglichkeit vorliegt.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbornen oder Tetracyclododecen mit Ethylen oder Propylen, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die Dichte der Folie kann je nach Zusammensetzung der Basisschicht in einem Bereich von 0,5 bis 0.85g/cm3 variieren. Dabei tragen Vakuolen zu einer Erniedrigung der Dichte bei, wohingegen Pigmente, wie z.B. TiO2 auf Grund des höheren spezifischen Gewichts die Dichte der Folie erhöhen. Vorzugsweise beträgt die Dichte der Folie auf Grund der vakuolenhaltigen Basisschicht 0,6 bis 0,8 g/cm3.

Zusätzlich kann die Basisschicht übliche Additive wie Neutralisationsmittel, Stabilisatoren, Antistatika und/oder Gleitmittel in jeweils wirksamen Mengen enthalten. Die nachstehenden Angaben in Gew.-% beziehen sich jeweils auf das Gewicht der Basisschicht.

Bevorzugte Antistatika sind Glycerinmonostearate, Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit □-Hydroxy-(C1-C4)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Insbesondere geeignete aliphatische Säureamide sind Erucasäureamid und Stearylamid.

Als Stabilisatoren, die auch in den übrigen Schichten eingesetzt werden, können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische und phosphitische Stabilisatoren wie Tris-2,6-dimethylphenylphosphit. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1 : 4 bis 2 : 1 und in einer Gesamtmenge von 0,1 bis 0,4 Gew.-%, insbesondere 0,1 bis 0,25 Gew.-%, eingesetzt.

Neutralisationsmittel, die auch in den übrigen Schichten eingesetzt werden, sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m2/g. Im allgemeinen werde 0,02 bis 0,1 Gew.-% zugesetzt.

Die erfindungsgemäßen Zwischenschichten enthalten mindestens 70 Gew.-%, vorzugsweise 80 bis 100 Gew.-% Propylenhomopolymer. Bevorzugt sind isotaktische Propylenhomopolymere, die gegebenenfalls bis zu 2 Gew.-% Ethylen als Comonomer enthalten können (Minicopo), mit einem Schmelzpunkt von 140 bis 170 °C, vorzugsweise von 150 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Polymeren beträgt im allgemeinen 0,5 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels Mw zum Zahlenmittel Mn liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren der Zwischenschicht erreicht man beispielsweise durch dessen peroxidischen Abbau oder durch Herstellung des Polypropylens mittels geeigneter Metallocenkatalysatoren. Auch in den Zwischenschichten können hochisotaktische bzw. hockkristalline Polypropylene, deren Isotaktizität nach ¹³C-NMR mindestens 95%, vorzugsweise 96 - 99% beträgt, eingesetzt werden. Die Zwischenschichten können die für die einzelnen Schichten beschriebenen üblichen Additive wie Antistatika, Neutralisationsmittel, Gleitmittel und/oder Stabilisatoren enthalten. Die Dicke der Zwischenschichten beträgt erfindungsgemäß jeweils mindestens 3 µm und liegt vorzugsweise im Bereich von 4-12 µm, insbesondere 6 bis 10 µm.

Für Ausführungsformen bei denen ein weißes Erscheinungsbild mit hoher Deckkraft des Etiketts gewünscht ist enthält eine, gegebenenfalls enthalten beide, Zwischenschicht/en Pigmente, insbesondere TiO2, beispielsweise in einer Menge von 2 bis 8 Gew.-%, bezogen auf das Gewicht der Zwischenschicht. Die Zwischenschichten weisen jedoch im allgemeinen keine Vakuolen und somit eine Dichte von ≥ 0,9g/cm³ auf.

Die Gesamtdicke der Etikettenfolie beträgt erfindungsgemäß mindestens 40µm und liegt vorzugsweise in einem Bereich von 60 bis 100µm, insbesondere 65 bis 80µm. Die innere Deckschicht ist im Sinne der vorliegenden Erfindung diejenige Deckschicht, welche beim, bzw. nach dem Etikettieren dem Behältnis zugewandt ist.

Erfindungsgemäß wird die Etikettenfolie als Rundumetikett für die Etikettierung von Behältern aus Kunststoffen, Papier, Pappe, Metall, Glas oder anderen Werkstoffen eingesetzt. Zur Etikettierung der Behälter mit der erfindungsgemäßen Etikettenfolie wird das Etikett bedruckt, zugeschnitten und gestapelt und an den Etikettiermaschinen zur Verfügung gestellt. Diese Maschinen arbeiten in der Regel kontinuierlich und führen die Behälter über ein Transportband dem eigentlich Etikettierbereich zu. Hier wird der Behälter von einer geeigneten Vorrichtung, beispielsweise einem Einlaufstern, erfaßt und an einen Behältertisch übergeben. Zwischen dem Behälterteller und einer Zentrierglocke wird der Behälter eingespannt und in Drehung versetzt. Ein Heißleimwerk bringt zunächst einen Heißleimstreifen oder einzelne Leimpunkte meist direkt auf den Behälter oder auf den Rand des Etiketts auf. Anschließend entnimmt der sich drehende Behälter über diesen Leimstreifen oder die Leimpunkte das Etikett einem Etikettenmagazin mit gestapelten Etiketten. Gleichzeitig beleimt ein weiteres Heißleimwerk das Etikettenende. Das Etikett wickelt sich einmal um den Behälter herum und wird an der Überlappung verklebt. Damit ist der eigentliche Etikettiervorgang beendet und der etikettierte Behälter wird weiter transportiert.

Überraschenderweise läßt sich die erfindungsgemäße Folie in derartigen Rundum-Etikettierprozessen mit einer Taktzahl von über 20.000 Behältern pro Stunde verarbeiten. Überraschenderweise ist es auch möglich die unbedruckten Folien zu großen Sheets, beispielsweise von mindestens 0,75qm bis zu 2qm, vorzugsweise 0,8 bis 1,6qm zuzuschneiden, zu stapeln and diese Sheets mit mehreren Rapporten gleichzeitig zu bedrucken. Diese großformatigen, bedruckten Sheets werden ebenfalls gestapelt, transportiert und abschließend auf die Original-Etikettengröße zugeschnitten. Überraschenderweise treten auch bei dieser Verarbeitung, insbesondere der Stapelung und Entstapelung der großformatigen Zuschnitte, keine nennenswerten Probleme auf. Überraschenderweise kann die Folie erfindungsgemäß mit einer Geschwindigkeit von bis zu 12000 Bögen, vorzugsweise 3000 bis 9000 Bögen pro Stunde vereinzelt und bedruckt werden. Auch die bedruckte Folie läßt sich anschließend beim Stanzprozeß problemlos entstaplen.

Die Erfindung betrifft weiterhin ein Verfahren zur Herstellung der erfindungsgemäßen Polyolefinfolie nach dem an sich bekannten Coextrusionsverfahren. Im Rahmen dieses Verfahrens werden die den einzelnen Schichten der Folie entsprechenden Schmelzen gleichzeitig und gemeinsam durch eine Flachdüse coextrudiert, die so erhaltene Folie zur Verfestigung auf einer oder mehreren Walze/n abgezogen, die mehrschichtige Folie anschließend gestreckt (orientiert), die gestreckte Folie thermofixiert und gegebenenfalls an der zur Behandlung vorgesehenen Oberflächenschicht plasma-, corona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 70 bis 130 °C, vorzugsweise 80 bis 110°C, zweckmäßigerweise mit Hilfe zweier entsprechend dem angestrebten Streckverhältnis verschieden schnellaufender Walzen durchführen und das Querstrecken vorzugsweise bei einer Temperatur von 120 bis 180 °C mit Hilfe eines entsprechenden Kluppenrahmens. Die Längsstreckverhältnisse liegen im Bereich von 3 bis 8 vorzugsweise 4 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flamm-behandelt. Die Behandlungsintensität liegt im allgemeinen im Bereich von 35 bis 50 mN/m, vorzugsweise 37 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im Wesentlichen unpolaren Polymermatrix entstehen.

Die Oberflächenbehandlung wie z.B. Corona-Behandlung kann sowohl sofort bei der Herstellung der Etikettenfolie wie auch zu einem späteren Zeitpunkt, z.B. unmittelbar vor dem Bedrucken des Etiketts erfolgen.

Zur Charakterisierung der Rohstoffe und der Folien wurden die folgenden Meßmethoden benutzt:

### Schmelzflußindex

Der Schmelzflußindex der Propylen polymeren wurde nach DIN 53 735 bei 2,16 kg Belastung und 230 °C gemessen und bei 190°C und 2,16 kg für Polyethylene.

### Schmelzpunkte

DSC-Messung, Maxima der Schmelzkurve, Aufheizgeschwindigkeit 20 K/min.

### Dichte

Die Dichte wird nach DIN 53 479, Verfahren A, bestimmt.

### Rauheitsmessung

Als Maß für die Rauheit wurden die Rauheitswerte Rz der Folien in Anlehnung an DIN 4768 Teil 1 und DIN ISO 4288 sowie DIN 4772 und 4774 mittels eines Perthometer Typ S8P der Firma Feinprüf Perthen GmbH, Göttingen, nach dem Tastschnitt-Verfahren gemessen. Der Meßkopf, ein Einkufentastsystem gemäß DIN 4772, war mit einer Tastspitze mit dem Radius 5 µm und einem Flankenwinkel von 90° bei einer Auflagekraft von 0,8 bis 1,12 mN sowie einer Gleitkufe mit Radius 25 mm in Gleitrichtung ausgestattet. Der vertikale Meßbereich wurde auf 62,5 µm, die Taststrecke auf 5,6 mm und der Cut-off des RC-Filters gemäß DIN 4768/1 auf 0,25 mm eingestellt. Alle Rz-Werte in der vorliegenden Anmeldung beziehen sich auf diesen Cut off von 0,25mm.

Die Erfindung wird nunmehr durch die nachfolgenden Beispiele erläutert.

### Beispiel 1

Nach dem Coextrusionsverfahren wurde aus einer Breitschlitzdüse eine fünfschichtige Vorfolie extrudiert. Diese Vorfolie wurde auf einer Kühlwalze abgezogen, verfestigt und anschließend in Längs- und Querrichtung orientiert und abschließend fixiert. Die Oberfläche der äußeren Deckschicht wurde mittels Corona zur Erhöhung der Oberflächenspannung vorbehandelt. Die fünfschichtige Folie hatte einen Schichtaufbau erste (äußere) Deckschicht/erste Zwischenschicht/Basisschicht/zweite Zwischenschicht/zweite (innere) Deckschicht. Die einzelnen Schichten der Folie hatten die folgende Zusammensetzung:

### Erste Deckschicht (3,0 µm):

∼60 Gew.-% Ethylen-Propylen-Copolymerisat mit einem Ethylen-Anteil von 4 Gew.% und einem Schmelzpunkt von 135°C; Schmelzflußindex von 7,3g/10 min bei 230 °C und 2,16 kg Belastung (DIN 53 735).

40 Gew.% MDPE mit einem MFI von 0,28g/10min (2,16kg und 190°C); Dichte von 0,937g/ccm³ und einem Schmelzpunkt von 126°C

0,1 Gew.% SiO₂ Antiblockmittel

### Erste Zwischenschicht (7µm)

100 Gew.-% Propylenhomopolymerisat (PP) mit einem n-heptantöslichen Anteil von 4,5 Gew.% (bezogen auf 100 % PP) und einem Schmelzpunkt von 165 °C; einem Schmelzflußindex von 3,2 g/10 min bei 230 °C und 2,16 kg Belastung (DIN 53 735)

### Basisschicht

85,8 Gew.-% Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735) und

10 Gew.-% Calciumcarbonat mit einem mittleren Teilchendurchmesser von 3,5 µm 4% Gew.-% TiO2 mit einem mittleren Teilchendurchmesser von 0,1 bis 0,3 µm

0,2 Gew.-% tertiäres aliphatische Amin als Antistatikum (Armostat 300)

### Zweite Zwischenschicht (4µm)

100 Gew.-% Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735)

Zweite Deckschicht (5µm):

~60 Gew.-% Ethylen-Propylen-Copolymerisat mit einem Ethylen-Anteil von 4 Gew.-% (bezogen auf das Copolymer) und einem Schmelzpunkt von 135°C; und einem Schmelzflußindex von 7,3g/10 min bei 230 °C und 2,16 kg Belastung (DIN 53 735)

40 Gew.-% MDPE mit einem MFI von 0,28g/10min (2,16kg und 190°C); Dichte von 0,937g/ccm³ und einem Schmelzpunkt von 126°C

0,1 Gew.-% SiO₂ Antiblockmittel

Alle Schichten der Folie enthielten zusätzlich Stabilisator und Neutralisationsmittel in üblichen Mengen.

Im einzelnen wurden die folgenden Bedingungen und Temperaturen bei der Herstellung der Folie gewählt:

| | |
|---|---|
| Extrusion: | Extrusionstemperatur ca. 250 °C |
| Abkühlwalze: | Temperatur 25°C, |
| Längsstreckung: | T = 120 °C |
| Längsstreckung um den | Faktor 4,8 |
| Querstreckung: | T = 155 °C |
| Querstreckung um den | Faktor 8 |
| Fixierung | T = 133°C |

Die Folie wurde auf der Oberfläche der äußeren Deckschicht mittels Corona oberflächenbehandelt. Die Folie hatte eine Dichte von 0,7g/cm³ und eine Dicke von 75µm. Die Rauheit Rz betrug auf der Oberfläche der ersten Deckschicht 3,0µm und auf der Oberfläche der zweiten Deckschicht 3,5µm.

### Vergleichsbeispiel 1:

Es wurde eine Folie nach Beispiel 1 hergestellt. Im Unterschied zu Beispiel 1 wurden beide Zwischenschichten weggelassen. Um die Gesamtdicke der Folie zu erhalten wurde die Dicke der Basisschicht von 56µm auf 67µm erhöht. Um die gleiche Dichte der Folie einzustellen wurde der Gehalt an CaCO3 auf 8,5 Gew.-% reduziert. Die übrige Zusammensetzung und die Verfahrensbedingungen bei der Herstellung der Folie wurden nicht verändert. Die Folie hatte eine Dichte von 0,69g/cm³ und eine Dicke von 75µm. Die Rauheit Rz auf der Oberfläche der ersten Deckschicht erhöhte sich leicht auf 3,3µm und betrug auf der Oberfläche der zweiten Deckschicht weiterhin 3,5µm.

### Vergleichsbeispiel 2:

Es wurde eine Folie nach Beispiel 1 hergestellt. Im Unterschied zu Beispiel 1 wurde die Dicke der äußeren Deckschicht von 3µm auf 1,5 µm reduziert. Die Dicke der zweiten Deckschicht wurde von 5µm auf 1,3 µm reduziert. Die übrige Zusammensetzung und die Verfahrensbedingungen bei der Herstellung der Folie wurden nicht verändert. Die Folie hatte eine Dichte von 0,68g/cm³ und eine Dicke von ca. 70µm. Die Rauheit Rz auf der Oberfläche der ersten Deckschicht verringerte sich auf 2,0µm und betrug auf der Oberfläche der zweiten Deckschicht nur noch 1,8µm.

### Vergleichsbeispiel 3:

Es wurde eine Folie nach Beispiel 1 hergestellt. Im Unterschied zu Beispiel, 1 bestand die äußere Deckschicht nur aus dem angegebenen Propylen-EthylenCopolymer mit SiO₂ Zusatz, d.h. das Polyethylen wurde weggelassen. Die Schichtdicke wurde auf 1µm reduziert. Der Aufbau dieser Folie entspricht den üblichen in-Mold Etiketten nach dem Stand der Technik. Die übrige Zusammensetzung und die Verfahrensbedingungen bei der Herstellung der Folie wurden nicht verändert. Die Folie hatte eine Dichte von 0,7g/cm³ und eine Dicke von ca. 73µm. Die Folie weißt jetzt auf der äußeren Seite eine glänzende Oberfläche auf. Die Rauheit Rz auf der Oberfläche der ersten Deckschicht verringerte sich auf 0,4µm und betrug auf der Oberfläche der zweiten Deckschicht weiterhin 3,5µm.

| Nr. | Dicke Basis | Dichte | Dicke DS Außen | Rz DS Außen | Dicke DS Innen | Rz DS Innen | Dicke ZWS Außen | Dicke ZWS innen | Entstapeln der Sheets Anzahl pro Stunde | Entstapeln der Etiketten qualitativ |
|---|---|---|---|---|---|---|---|---|---|---|
| | µm | g/cm³ | µm | µm | µm | µm | µm | µm | | |
| Bsp. 1 | 56 | 0,70 | 3,0 | 3,0 | 5,0 | 3,5 | 7,0 | 4,0 | 8000 | *** |
| VB 1 | 67 | 0,69 | 3,0 | 3,3 | 5,0 | 3,5 | ./. | ./. | 2500 | ** |
| VB2 | 56 | 0,68 | 1,5 | 2,0 | 1,3 | 1,8 | 7,0 | 4,0 | 500 | * |
| VB 3 | 56 | 0,70 | 1,0 (ohne PE) | 0,4 | 5,0 | 3,5 | 7,0 | 4,0 | 100 | * |

| | | | | | | | | | | |
|---|---|---|---|---|---|---|---|---|---|---|
| *** entstapelbar ohne Störungen ** gelegentliche Störungen * häufige Störungen DS = Deckschicht ZWS = Zwischenschicht Basis = Basisschicht | | | | | | | | | | |

### Erfindungsgemäße Verwerdung

Die Folien gemäß den Beispielen und den Vergleichsbeispielen wurden zu großformatigen Sheets von 70cm X 70cm zugeschnitten und gestapelt. Die einzelnen Sheets wurden mit einem 4-fach Rapport bedruckt. Aus den bedruckten Sheets wurden die Rapporte als einzelne Etiketten ausgestanzt, gestapelt und abschließend an einer Etikettier Maschine bereitgestellt. Die Etiketten wurden zur Etikettierung von zylindrisch geformten Behältern eingesetzt.

Die Folie gemäß dem Beispiel 1 ließ sich sowohl beim Bedrucken als auch an der Etikettiermaschine problemlos stapeln und vereinzeln. Bei Bedrucken der Bögen konnte die Geschwindigkeit auf bis zu 8000 Bögen pro Stunde gesteigert werden.

Die Folien nach den Vergleichsbeispielen konnten nicht mit dieser Geschwindigkeit verarbeitet werden, sowohl beim Bedrucken als auch beim Etikettieren mußte die Prozeß-Geschwindigkeit erheblich reduziert werden (siehe Tabelle). Trotz verringerter Geschwindigkeit traten in unterschiedlichem Maß Störungen durch Fehl-oder Doppeleinzug auf, wodurch teilweise der Druckprozeß oder der Etikettierprozeß unterbrochen werden mußte.

## Patentansprüche

1. Verwendung einer mehrschichtigen, opaken, biaxial orientierten Polyolefinfolie mit einer Dicke von mindestens 40 µm aus einer vakuolenhaltigen Basisschicht und beidseitig darauf aufgebrachten Zwischenschichten und beidseitigen Deckschichten, wobei beide Zwischenschichten eine Dicke von mindestens 3 µm aufweisen und mindestens 70 Gew.-% eines Propylenhomopolymeren enthalten und beide Deckschichten aus einer Mischung aus inkompatiblen Polymeren aufgebaut sind und jeweils eine Oberflächenrauheit Rz von mindestens 2,5 µm (bestimmt bei cut off des RC-Filters gemäß DIN 4768/1 von 0,25 mm) aufweisen, als Rundumetikett.

2. Verwendung nach Anspruch 1, **dadurch gekennzeichnet, daß** beide Deckschichten aus einer Mischung aus Propylenhomopolymer, Propylencopolymer und/oder Propylenterpolymer und einem Polyethylen aufgebaut sind.

3. Verwendung nach Anspruch 2, **dadurch gekennzeichnet, daß** Polyethylen ein HDPE oder ein MDPE ist.

4. Verwendung nach einem der Ansprüche 2 oder 3, **dadurch gekennzeichnet, daß** jede Deckschicht 5 bis 70 Gew.-% des Polyethylens, bezogen auf das Gewicht der jeweiligen Deckschicht, enthält.

5. Verwendung nach einem der Ansprüche 1 bis 3, **dadurch gekennzeichnet, daß** jede Deckschicht 30 bis 95 Gew.-% Propylenhomopolymer, Propylencopolymer und/oder Propylenterpolymer, bezogen auf das Gewicht der jeweiligen Deckschicht, enthält.

6. Verwendung nach einem der Ansprüche 1 bis 5, **dadurch gekennzeichnet, daß** eine oder beide Deckschichten zusätzlich Antiblockmittel enthalten.

7. Verwendung nach einem der Ansprüche 1 bis 6, **dadurch gekennzeichnet, daß** beide Deckschichten weniger als 2 Gew.-% partikelförmige Füllstoffe enthalten.

8. Verwendung nach einem der Ansprüche 1 bis 7, **dadurch gekennzeichnet, daß** die Dicke jeder Zwischenschicht 5 bis 10 µm und die Dicke jeder Deckschicht 3 bis 5 µm beträgt.

9. Verwendung nach einem der Ansprüche 1 bis 8, **dadurch gekennzeichnet, daß** beide Zwischenschichten eine Dichte von ≥ 0,9 g/cm³ aufweisen.

10. Verfahren zum Rundumetikettieren von Behältern mit einem Rundumetikett aus einer mehrschichtigen, opaken, biaxial orientierten Polyolefinfolie mit einer Dicke von mindestens 40 µm aus einer vakuolenhaltigen Basisschicht und beidseitig darauf aufgebrachten Zwischenschichten und beidseitigen Deckschichten wobei beide Zwischenschichten eine Dicke von mindestens 3 µm aufweisen und mindestens 70 Gew.-% eines Propylenhomopolymeren enthalten und beide Deckschichten aus einer Mischung aus inkompatiblen Polymeren aufgebaut sind und jeweils eine Oberflächenrauheit Rz von mindestens 2,5 µm (bestimmt) bei cut off des RC-Filters gemäß DIN 4768/1 von 0,25 mm) aufweisen, bei dem die Rundumetiketten einem Stapel entnommen werden, **dadurch gekennzeichnet, daß** der Etikettierprozeß mit einer Taktzahl von 10.000 bis 20.000 Behältern pro Stunde durchgeführt wird.

## Claims

1. Use of a multi-layer, opaque, biaxially-oriented polyolefin film with a thickness of at least 40 µm of a vacuole-containing base layer and intermediate layers applied on both sides thereof and covering layers on both sides thereof, wherein both intermediate layers have a thickness of at least 3 µm and contain at least 70 % by weight of a propylene homopolymer, and both covering layers are constructed of a mixture of incompatible polymers and respectively have a surface roughness Rz of at least 2.5 µm (determined according to DIN 4768/1 at the cut-off of 0.25 mm of the RC filter) as wrap-around label.

2. Use according to claim 1, **characterised in that** both covering layers are constructed of a mixture of propylene homopolymer, propylene copolymer and/or propylene terpolymer and a polyethylene.

3. Use according to claim 2, **characterised in that** the polyethylene is a HDPE or a MDPE.

4. Use according to one of claims 2 or 3, **characterised in that** every covering layer contains 5 to 70 % by weight of the polyethylene, in relation to the weight of the respective covering layer.

5. Use according to one of claims 1 to 3, **characterised in that** every covering layer contains 30 to 95 % by weight of propylene homopolymer, propylene copolymer and/or propylene terpolymer, in relation to the weight of the respective covering layer.

6. Use according to one of claims 1 to 5, **characterised in that** one or both covering layers additionally contain antiblocking agents.

7. Use according to one of claims 1 to 6, **characterised in that** both covering layers contain less than 2 % by weight of particle-shaped fillers.

8. Use according to one of claims 1 to 7, **characterised in that** the thickness of each intermediate layer is 5 to 10 µm, and the thickness of each covering layer is 3 to 5 µm.

9. Use according to one of claims 1 to 8, **characterised in that** both intermediate layers have a density of ≥ 0.9 g/cm³.

10. Method for wrap-around labelling of containers with a wrap-around label of multi-layer, opaque, biaxially-oriented polyolefin film with a thickness of at least 40 um of a vacuole-containing base layer and intermediate layers applied on both sides thereof and covering layers on both sides thereof wherein both intermediate layers have a thickness of at least 3 µm and contain at least 70 % by weight of a propylene homopolymer, and both covering layers are constructed of a mixture of incompatible polymers and respectively have a surface roughness Rz of at least 2.5 µm (determined according to DIN 4768/1 at the cut-off of 0.25 mm of the RC filter), wherein the wrap-around labels are removed from a stack, **characterised in that** the labelling process is carried out with a number of cycles of 10,000 to 20,000 containers per hour.

## Revendications

1. Utilisation d'un film polyoléfine multicouches, opaque, à orientation biaxiale d'une épaisseur d'au moins 40 µm, constitué d'une couche de base contenant des vacuoles et de couches intermédiaires appliquées sur les deux faces de cette dernière et d'une couche de recouvrement sur les deux faces, les deux couches intermédiaires présentant une épaisseur d'au moins 3 µm et contenant au moins 70 % en poids d'un homopolymère de propylène et les deux couches de recouvrement étant constituées à partir d'un mélange de polymères incompatibles et présentant chacune une rugosité de surface Rz d'au moins 2,5 µm (définie par cut off du filtre RC selon la norme DIN 4768/1 de 0,25 mm), en tant qu'étiquette périphérique.

2. Utilisation selon la revendication 1, **caractérisée en ce que** les deux couches de recouvrement sont constituées d'un mélange d'homopolymère de propylène, de copolymère de propylène et/ou de terpolymère de propylène et d'un polyéthylène.

3. Utilisation selon la revendication 2, **caractérisée en ce que** le polyéthylène est un HDPE ou un MDPE.

4. Utilisation selon l'une quelconque des revendications 2 ou 3, **caractérisée en ce que** chaque couche de recouvrement contient de 5 à 70 % en poids du polyéthylène, en rapport au poids de la couche de recouvrement concernée.

5. Utilisation selon l'une quelconque des revendications 1 à 3, **caractérisée en ce que** chaque couche de recouvrement contient de 30 à 95 % en poids d'un homopolymère de propylène, d'un copolymère de propylène et/ou d'un terpolymère de propylène, en rapport au poids de la couche de recouvrement concernée.

6. Utilisation selon l'une quelconque des revendications 1 à 5, **caractérisée en ce qu'**une ou les deux couches de recouvrement contiennent en supplément des produits antibloquants.

7. Utilisation selon l'une quelconque des revendications 1 à 6, **caractérisée en ce que** les deux couches de recouvrement contiennent moins de 2 % en poids de matières de charge sous forme de particules.

8. Utilisation selon l'une quelconque des revendications 1 à 7, **caractérisée en ce que** l'épaisseur de chaque couche intermédiaire est de 5 à 10 µm et l'épaisseur de chaque couche de recouvrement est de 3 à 5 µm.

9. Utilisation selon l'une quelconque des revendications 1 à 8, **caractérisée en ce que** les deux couches intermédiaires présentent une densité ≥ 0,9 g/cm³.

10. Procédé pour l'étiquetage périphérique de récipients avec une étiquette périphérique en un film en polyoléfine multicouches, opaque, à orientation biaxiale d'une épaisseur d'au moins 40 µm, constitué d'une couche de base contenant des vacuoles et de couches intermédiaires appliquées sur les deux faces de cette dernière et d'une couche de recouvrement sur les deux faces, les deux couches intermédiaires présentant une épaisseur d'au moins 3 µm et contenant au moins 70 % en poids d'un homopolymère de propylène et les deux couches de recouvrement étant constituées à partir d'un mélange de polymères incompatibles et présentant chacune une rugosité de surface Rz d'au moins 2,5 µm (définie par cut off du filtre RC selon la norme DIN 4768/1 de 0,25 mm), dans lequel on retire les étiquettes périphériques d'une pile, **caractérisé en ce que** le processus d'étiquetage est réalisé à une cadence de 10.000 à 20.000 récipients par heure.
